# EUROPEAN PATENT SPECIFICATION

(11) **EP 3 118 558 B1**
(45) Date of publication and mention of the grant of the patent: **12.12.2018**
(21) Application number: 16179515.8
(22) Date of filing: 14.07.2016
(51) Int. Cl.: F28D 20/00

(54) **GROUND HEAT ACCUMULATOR**
ERDWÄRMESPEICHER
ACCUMULATEUR DE CHALEUR DU SOL

(30) Priority: 15.07.2015 SK 500712015 U
(43) Date of publication of application: 18.01.2017
(73) Proprietor: Zilinská Univerzita V Ziline, 010 26 Zilina (SK); ETOP Alternative Energy, s.r.o., 911 01 Trencin (SK)
(72) Inventor: Gottwald, Michal, 010 01 ilina (SK); Luká , Vladimír, 020 01 Púchov (SK)
(74) Representative: Kubinyi, Peter

(56) References cited:
- EP-A1- 2 557 385
- DE-A1- 3 018 337
- DE-A1-102008 057 495
- FR-A1- 2 918 086
- US-A- 4 361 135

## Description

### Technical Field

This technical solution relates to ground heat accumulator especially for accumulation of seasonal surplus heat from solar collectors, photovoltaic panels, solar applications and so forth.

### Background Art

It is known that seasonal surplus heat form solar collectors, photovoltaic panels, solar applications and so on, can be in certain amount accumulated to the ground. This is done by supplying of heat transfer medium, mainly water, from relevant circuits of solar applications to heat exchangers installed underground, in earth, in various depths.

Document WO 81/00754 A1 discloses underground heat accumulator of the low temperature type for storing solar energy from a solar collector by means of plurality of buried double pipes with an outer pipe and an inner pipe, has said pipes conically disposed, extending from a central well with a cover near the surface of the ground. The conical position of the pipes provides a very small area in the surface of the ground while embracing a large volume of earth in the depth. The loss of heat at the surface of the ground is therefore limited and yet the accumulation capability is adequate. Although this solution eliminates, in certain scope, the disadvantage of large excavations necessary for installations of ground heat accumulators using vertical pipes, the excavations, though in smaller scope, are still necessary.

Further, the borehole thermal energy storage (BTES) system is known. This system is composed of system of boreholes, which resemble conventional drilled wells. After the bore is made, a plastic pipe with "U" shaped bend at its end is inserted into the bore. In order to achieve good heat conductivity with the surrounding earth, the bore is then injected with material having high thermal conductivity. Such system, installed e.g. at Drake Landing Solar Community, in Okotoks, in Alberta, CA, comprises 144 bores 37 meters deep with span of 2.25 meters. These bores cover the area with diameter of 35 meters. The "U" shaped pipes are connected at the surface, in groups of six, in direction from the centre to the outer edge, where they are connected back to the energy system above ground. This entire field of system of bores is covered with insulating layer and further with the soil. Although it is powerful system of ground storage of solar energy, its obvious disadvantage is in its considerable construction complexity. Document US 4 361 135 A discloses a cooperative heat transfer and ground coupled storage system wherein collected solar heat energy is ground stored and permitted to radiate into the adjacent ground for storage therein over an extended period of time when such heat energy is seasonally maximally available. Thereafter, when said heat energy is seasonally minimally available and has propagated through the adjacent ground a substantial distance, the stored heat energy may be retrieved by a circumferentially arranged heat transfer means having a high rate of heat transfer. This ground storage system can use heat that radiated from a storage tank to the adjacent ground. This system however may pose disadvantages in that the intended volume of ground may not be sufficiently heated to usable temperature in desired period of time and thus the heat that radiated from the tank may be considered as lost heat.

Document DE 10 2008 057495 A1 discloses the arrangement having a heat pump thermally coupled to a main storage unit at a warm side and connected to a hydraulic pipe system at a cold side, where the pipe system contains heat transfer fluid. A component containing the heat pump is directly arranged at the main storage unit. The pipe system forms two overlapping partitioned loops, where one of the partitioned loops includes a regenerative heat source i.e. thermal solar collector and the other partitioned loop includes an intermediate storage arrangement i.e. earth storage arrangement. This earth storage arrangement is simple and does not concern heat losses that reduce the storage efficiency.

The same applies for ground heat storage disclosed in documents FR 2 918 086 and DE 30 18 337A1.

Document EP 2 557 385 A1 discloses a thermal energy store that is particularly suitable for buildings that are in the process of being constructed. Array of heat exchangers is thus enclosed by building foundations which also provide a barrier for heat losses.

The object of the invention is improved ground heat accumulator, which substantially avoids construction complexity and high costs related thereto, while maintaining good efficiency during heat accumulation into the ground.

### Summary of invention

Said object is achieved by a ground heat accumulator according to claim 1.

The ground heat accumulator according to this technical solution significantly reduces costs for accompanying ground works or construction works. Removal of the uppermost layer in order to expose earth at a place chosen for the accumulator is sufficient for creating this ground heat accumulator. Another ground works to construct the accumulator according to this solution are practically not necessary, as the accumulator is constructed by heat exchangers, which are directly pressed, rammed or drilled-screwed into the ground at a place chosen for the accumulator. Inlets and outlets of the heat transfer medium at the heat exchangers are connected to respective outlets of heat transfer medium from solar applications and to the inlets of heat transfer medium to solar and/or energy applications.

Preferably, a tank reservoir with separate heat transfer/storage medium, the most preferably water, containing a heat exchanger connected to the outlet of heat transfer medium from solar applications and to the inlet of heat transfer medium to the solar and/or energy applications, is placed between the heat exchangers.

Said arrangement provides dynamic accumulation member, which is able to fast accumulate heat surplus. This is preferable especially when fast transfer of vast amount of heat surplus is required, as the water is able to absorb heat faster than the ground.

It is also preferable if a part of the heat exchangers connected to the outlet of heat transfer medium from solar thermal collectors is surrounded by the heat exchangers connected to the outlet of heat transfer medium from cooling of photovoltaic panels. Thus an outer zone is preferably created, which by heating-up provides cooling of photovoltaic panels while simultaneously creating an insulation between the core, i.e. inner portion of the accumulator composed of the heat exchangers supplied by surplus heat from solar thermal collectors, optionally combined with the tank filled with separate heat transfer medium, and the outer earth around the entire accumulator. Heat losses of the core of the accumulator are thus reduced, while it is not necessary to provide vertical mechanical heat insulation around this accumulator.

### Brief description of drawings

Technical solution is better explained on attached drawings, wherein
Fig. 1 shows top view of the ground heat accumulator according to this technical solution, in circular arrangement with connections of the heat exchangers to the distributors of heat transfer medium;
Fig. 2 shows top view of the ground heat accumulator according to this technical solution, in circular arrangement with central tank reservoir containing separate heat transfer/storage medium;
Fig. 3 a, b shows top view of the alternative arrangements of the tank reservoirs technical solution, in circular arrangement with central tank reservoirs containing separate heat transfer/storage medium in the ground heat accumulator according to this technical solution;
Fig. 4 schematically shows side sectional view of the ground heat accumulator according to this technical solution, constructed as separate ground body.
Fig. 5 schematically shows side sectional view of the ground heat accumulator according to this technical solution, constructed within the foundations of the above surface construction;
Fig. 6 shows side sectional view of the heat exchanger for the ground heat accumulator according to this technical solution in the form of ground needle, with free flowing liquid heat transfer medium supplied to the chamber of the tubular body;
Fig. 7 shows side view of the heat exchanger for the ground heat accumulator according to this technical solution, in the form of ground needle, with means to enlarge the outer surface of the tubular body;
Fig. 8 shows side sectional view of the heat exchanger for the ground heat accumulator according to this technical solution, in the form of ground screw, with free flowing liquid heat transfer medium supplied to the chamber of the tubular body ;
Fig. 9 shows side sectional view of the heat exchanger for the ground heat accumulator according to this technical solution, in the form of ground screw, with separate circuit of the liquid heat transfer medium in the chamber of the tubular body, wherein the chamber is filled with separate liquid heat transfer medium;
Fig. 10 shows side sectional view of the heat exchanger for the ground heat accumulator according to this technical solution, in the form of ground screw, with separate circuit of the liquid heat transfer medium in the chamber of the tubular body, wherein the chamber is filled with solid heat transfer medium
Fig. 11 shows side view of elements for enlarging of the total outer active surface of the exchanger body, in the form of flat thread;
Fig. 12 shows side view of elements for enlarging of the total outer active surface of the exchanger body, in the form of plates in direction of axis of the tubular body
Fig. 13 shows elements for enhancing of heat transfer and heat distribution in the chamber, in section of the tubular body.

### Description of embodiments

Basic embodiment of the ground heat exchanger is represented by a field of the heat transfer exchangers 1, which are installed by pressing, ramming or drilling-screwing into the ground at previously chosen and prepared area. The exchangers 1 are then connected in series in the direction of the flow of heat transfer medium. The field of the exchangers 1 can take various shapes. The shape of the field of the exchangers 1 of the ground heat accumulator can be affected e.g. by geological conditions, requirements for the installation, e.g. under a building, on the side of a building and so on. Then also the number of installed exchangers 1 and their span in the ground accumulator can depend upon said conditions and requirements.

Detailed structure of the exchangers 1 is for the sake of clarity described separately with reference to accompanying figures, after the description of embodiments of the ground heat exchanger according to this technical solution.

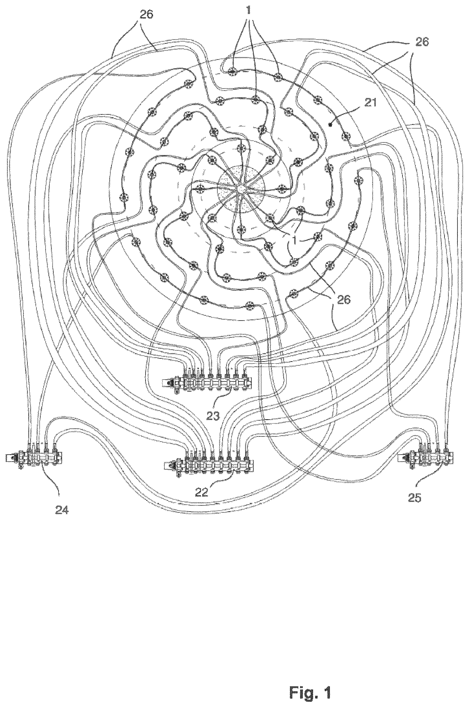

Fig. 1 shows one possible embodiment of the ground heat exchanger according to this technical solution. The ground heat exchanger is in this example of embodiment composed of substantially circular field of the heat exchangers 1. The exchangers 1 are in this example installed in rows on concentric circles around geometric center of the ground heat accumulator. The heat exchangers 1 are installed by pressing, ramming or drilling-screwing into the ground, without a need to excavate the ground body 21 of the accumulator, and to refill it with soil after the heat exchangers 1 are installed.

Then, the heat exchangers 1 are connected to supply of the heat transfer medium from solar application through respective distributors 22, 23, 24, 25 and ducts 26 of heat transfer medium. The exchangers 1 are in this example connected in radial lines from the center of the accumulator. Heat transfer medium heated in the solar application in this example flows through the distributor 23 by ducts 26 firstly to the heat exchangers 1 closest to the centre of the accumulator, and then continues through radial line of the exchangers 1 from the center of the accumulator to its periphery and to the distributor 22. Heat transfer medium transfers heat through the exchangers 1 into the ground, i.e. into the ground body 21 of the accumulator. Cooled heat transfer medium is then supplied back to the solar application. The solar application, from which heat is stored in the accumulator, can be in this example solar thermal collectors, from which surplus heat is disposed this way.

In the last row of the exchangers 1 in this ground heat accumulator, the exchangers 1 are connected in series on the periphery of this accumulator. Heat transfer medium heated in the solar application is in this example supplied through the distributor 24 by ducts 26 to the heat exchangers 1 on the periphery of the accumulator, then continues through the row of the heat exchangers 1 on the periphery of the accumulator, and to the distributor 25. Heat transfer medium transfers heat through these exchangers 1 into the ground on the periphery of the accumulator. Cooled heat transfer medium is then supplied back to the solar application. The solar application can be, in this example, photovoltaic panels, where cooling of panels is provided this way.

Said embodiment of the ground heat accumulator provides for outer zone, which by heating-up provides cooling of photovoltaic panels while simultaneously creating an insulation between the inner portion of the accumulator composed of the heat exchangers 1 supplied by surplus heat from solar thermal collectors and the outer ground surrounding the entire accumulator. Heat losses of the inner portion of the accumulator to surrounding ground are thus reduced. In this example, the outer row of the exchangers 1 practically provides thermal insulation of the inner portion of the accumulator.

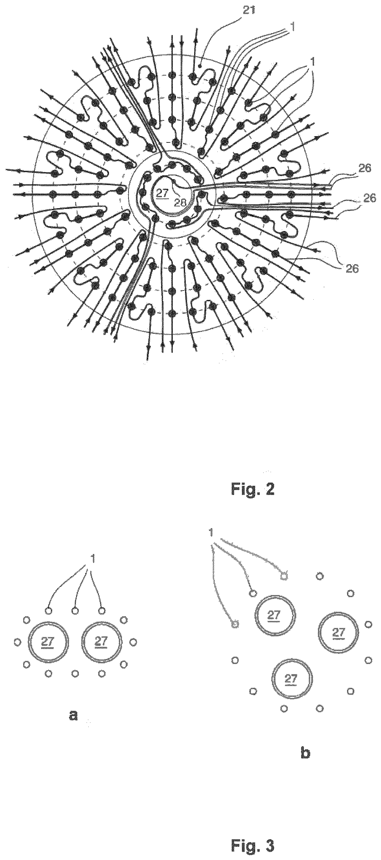

Fig. 2 and 3 show another possible embodiment of the ground heat exchanger according to this technical solution. In this example, the ground accumulator also has circular arrangement. A tank reservoir 27 with separate heat transfer/storage medium, the most preferably water, is placed substantially in geometric center of the accumulator. The tank 27 is normally placed into excavation or bore, while original compactness of the ground body 21 of the accumulator into which the heat exchangers 1 are then installed by ramming or drilling-screwing, is not affected. The tank 27 is preferably made of material with good heat transfer properties. Possible gap between the tank 27 and the excavation for the tank can preferably be filled by suitable heat transfer filler. The heat exchanger 28 to be connected to the outlet of heat transfer medium from the solar application is placed into the tank 27. Such heat exchangers 28 are commonly known and used. Type, size, shape, or the number of the heat exchangers 28 in the tank 27, as well as size of the tank 27, or also the number of the tanks 27, i.e. thermal capacity of the tank 27 is basically determined on the amount of surplus heat to be disposed and stored. The tank 27 provides suitable dynamic accumulation member, which is capable of fast accumulation of heat surplus. This is advantageous especially when fast disposal of vast amount of surplus heat is needed, e.g. for cooling of photovoltaic panels. As shown in Fig. 3, as an example, the ground heat accumulator can contain also several tanks 27, in various geometric arrangements.

Then, around the tank 27, the heat exchangers 1 are installed by pressing, ramming or drilling-screwing, similarly to the preceding example, on concentric circles around geometric centre of the ground heat accumulator. The heat exchangers 1 are in this example connected through the distributors, not shown, in series so that in the first circle from the tank 27, the exchangers 1 are connected in rows on the periphery of the tank 27, and the other exchangers 1 are then connected in series on radials from the centre of the accumulator. As is shown in Fig. 2, rows of the exchangers 1 can be connected also in combination, i.e. part of the exchangers 1 of the connected series of exchangers is on a radial and part of them on the periphery is on the circle, in this example the last one form the geometric centre of the ground heat exchanger.

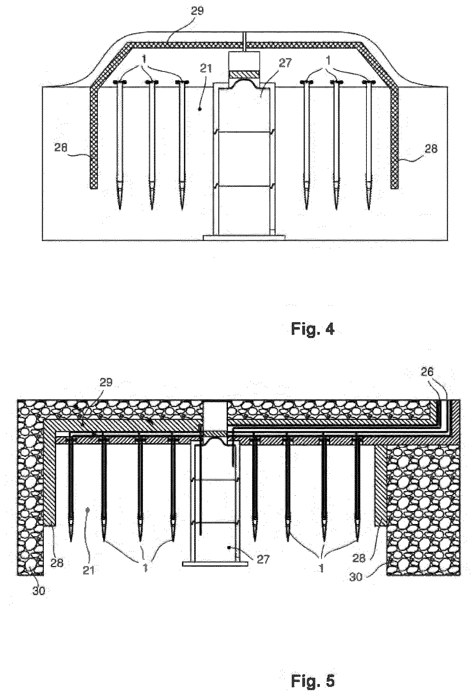

The ground heat exchanger can be constructed as separate facility, Fig. 4, as well as part of another facility or construction, Fig. 5.

The ground heat accumulator according to this technical solution, according to Fig. 4, in the embodiment with the tank 27, is constructed at given place in the ground as separate facility. After installing the exchangers 1 by pressing, ramming or drilling-screwing into the ground body 21, the ground body 21 is provided by vertical thermal insulation 28 on its periphery to minimize losses from the accumulator to the surrounding ground. The insulation 28 is of course installed without disintegration of the earth of the ground body 21 where the exchangers 1 are installed. After completion of ground part of the heat accumulator, i.e. after installing the ducts 26 and connecting the exchangers 1, the ground heat accumulator is covered by above ground insulation 29, thermal, optionally in combination with anti-moisture or water proof insulation. After the insulation is completed the ground heat accumulator is covered by a layer of soil. Such ground heat accumulators can be installed anytime at suitable place near already existing buildings or above ground constructions. The vertical ground insulation 28, as already described, can be replaced by a row of the exchangers 1 connected in series on the periphery of the accumulator, the ground body 21 respectively.

The ground heat exchanger according to Fig. 5 in the embodiment with the tank 27 is provided within the foundation of a building or above ground construction. In this embodiment, the ground body 21 of the accumulator is bordered by vertical foundation walls 30 of future building, which are preferably from the inner side provided by vertical thermal insulation 28. The foundation walls 30 are built such that the ground between them stays intact, which then will form the ground body 21 of the accumulator. Then, the tank 27 is installed into the ground bordered by the foundation walls 30, and around the tank 27 the heat exchangers 1 are installed by pressing, ramming or drilling-screwing into the ground of the ground body 21. After completing the ground part of the heat accumulator, i.e. after installing the ducts 26 and connecting the exchangers 1, the ground heat accumulator is covered with insulation 29, thermal, optionally in combination with anti-moisture or water proof insulation. After completing the insulation, the floor slab with respective openings for the ducts 26 to the exchangers 1 is built, in known manner, on the foundation walls 30 above the ground heat accumulator. The ground heat accumulator is such constructed within the building, where significantly positively affects energy balance of the building.

In the embodiment according to the Fig. 5, it is advantageous to start thermal charging of the ground heat accumulator already during continuation of further construction works on the above ground part of the building, to allow the capacity of the accumulator to be fully exploited after the building is finished and immediately after the building is used. In order to achieve this, it is possible to install e.g. photovoltaic panels at the building site, which will be cooled by circulation of the heat transfer medium through provided ground heat accumulator, which in this way will start to gradually accumulate heat in the ground body 21. Electric energy produced by the panels can be used for construction works. In order to avoid building of stationary temporary solar applications, which most likely would have to be removed after finishing the building, it is possible to provide mobile unit with photovoltaic panels or solar collectors. Such mobile unit can be provided on standard small trailers towed by personal cars, trailers, or semi-trailers. Onto such trailers, the structure supporting photovoltaic panels or solar collectors and respective connections for heat transfer medium, and in the case of photovoltaic panels also respective electrical connections are mounted.

As the mobile unit is transported to the place, respective connections are connected to the ground accumulator and entire system will work as described above.

In the case the ground heat accumulator makes use of the hest exchangers 1 working on the principle of generating heat from electric current, it is possible to use electric energy produced by photovoltaic panels also for thermal charging of the ground heat accumulator.

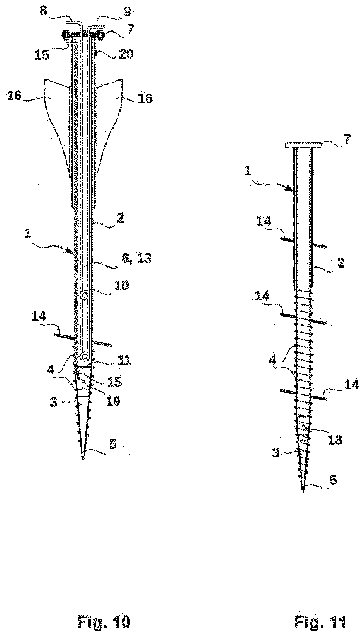

Supplying heat to the ground body 21 of the accumulator can cause excessive drying of the ground body 21 of the accumulator, what reduces efficiency of heat transfer between the heat exchangers 1 and the earth of the ground body 21. In order to decrease evaporation of water from the ground, said anti-moisture or water proof insulation can preferably be used, e.g. together with the thermal insulation 29 above the ground body 21 of the accumulator. It is however preferable, if the soil moisture of the ground body 21 can be controlled. This can be realized such that pipes for supplying moisturizing liquid, the most preferably water, are installed in the ground body 21. Said pipes are not shown in drawings. In other embodiment, this can be realized by the pipe of the inlet 15 of moisturizing water, i.e. system for moisturizing of the ground body 21 is provided directly by the heat exchangers 1, within which the pipe of moisturizing system is directly integrated. The mentioned is described below in the embodiments of the heat exchangers 1, particularly in the embodiment referring to the heat exchanger 1 according to Fig. 10

The ground heat exchanger according to this technical solution can be used for accumulation of heat as well as for cooling. If the ground body 21 of the accumulator has low temperature, the heat exchangers 1 can provide cooling of e.g. rooms such that heat transfer medium, cooled in the heat exchangers 1 is supplied to existing heating installations in the room, such as e.g. ducts of floor or alternatively wall or ceiling heating. Heat transfer medium cooled in the heat exchangers 1 then absorbs heat from rooms, thus providing cooling. If the heat exchangers 1 are not connected to supply of heat transfer medium heated in solar applications, heat accumulation in the ground body 21 of the accumulator is in this case very slow, and thus cooling can be provided for longer period.

Above described examples of embodiments of the ground heat accumulator according to this technical solution with reference to figures of the accumulator on accompanying drawings are only illustrative and do not include all possible embodiments of the ground heat accumulator. It is obvious that the ground heat accumulator can have various shapes of the field of the heat exchangers 1, also can include various number of the heat exchangers 1, with various span, and also in various combinations of connections to solar and/or energy applications.

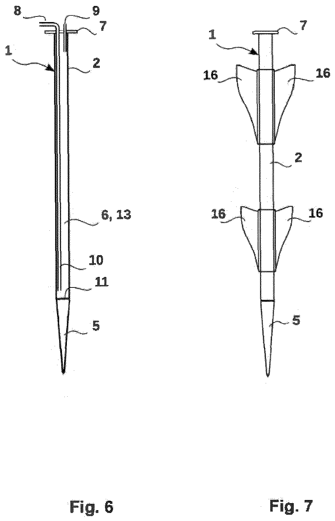

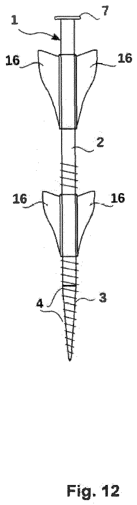

Further follows the description of examples of embodiments of the heat exchangers 1 applicable in the ground heat accumulator according to this technical solution with reference to Fig. 6 to Fig. 13.

Heat exchanger 1 for the ground heat accumulator according to this technical solution, according to Fig. 6, is in the form of ground needle. The exchanger 1 comprises the tubular body 2 provided at one end by piercing bit 5. The tubular body is at the other end provided by a flange 7 having means for connecting the inlet 8 and the outlet 9 of heat transfer medium, where in this example, this flange 7 at the same time serves as a closure of the hollow 6 of the tubular body 2. This flange 7, this end of the tubular body 2 respectively, also comprises means for attaching the pressing or ramming mechanism, when pressing or ramming the exchanger 1 into the ground. In case the exchanger 1 also serves as foundations of building structure, said end of the tubular body 2 comprises means for attaching the above ground part of building structure. Said means for attaching of the pressing or ramming mechanism, as well as means for attaching the above ground part of building structure are known, and need not to be further described. Also, for the sake of clarity, such means are not shown in drawings.

In this embodiment, the tubular body 2 is separated from the piercing bit 5 by a wall 11, which can be formed by the bottom of the tubular body 2. Such, the chamber 13 is created in the hollow 6 of the tubular body, within which the means 10 for distribution of the heat transfer medium are disposed. The means 10 for distribution of the heat transfer medium are in this example formed by a pipe with free end in the chamber 13 near the bottom of the tubular body 2, i.e. near the wall 11 between the tubular body 2 and the piercing bit 5. The flange 7 and the wall 11 in this example close the chamber 13 tightly, so that such exchanger 1 is suitable for application of liquid heat transfer medium, which is filled freely in the chamber 13. Dimensions of the chamber 13 in the tubular body 2, as well as dimensions of the tubular body 2 are determined by calculating the transfer or reception of heat, geologic conditions, or static requirements in case the exchanger 1 serves also as foundations for building structure.

In this embodiment, the exchanger 1 works as follows:
The exchanger 1 is by pressing or ramming mechanism, either manually driven or machine driven, pressed or rammed in known manner into the ground, without any moving of the soil by drilling or excavation.

In case of hard soils, before the exchanger 1 is pressed or rammed into the ground, it is possible to carry out pre-drilling or test drilling, where diameter of a bore is smaller than diameter of the tubular body 2. This drilling is carried out by respectively adjusted ground drill, while in such drilling the soil is preferably not removed from the bore, but is pressed out to the diameter of body of the drill bit used. The exchanger 1 is then pressed or rammed into the bore such prepared.

The inlet 8 and outlet 9 of the heat transfer medium are connected to respective inlet and outlet from the above ground application. The above ground application can be for example solar thermal collector for heating of water, where in this case, the heat exchanger according to this technical solution can serve for transfer and storage of surplus heat from heated water to ground accumulator. Heated water is supplied by the inlet 8 to the means 10 for distribution of the heat transfer medium. Supplied water in this case flows through the means 10 for distribution of the heat transfer medium to the outlet 9, while transferring heat primarily through the tubular body 2 to the soil of the ground accumulator.

The heat exchanger 1 for the ground heat accumulator according to this technical solution, according to Fig. 7, is in the form of ground needle. The exchanger 1 comprises the tubular body 2 provided at one end by piercing bit 5. The tubular body is at the other end provided by the flange 7 having means for connecting the inlet 8 and the outlet 9 of heat transfer medium, where in this example, this flange 7 at the same time serves as a closure of the hollow 6 of the tubular body 2. This flange 7, this end of the tubular body 2 respectively, also comprises means for attaching the pressing or ramming mechanism, when pressing or ramming the exchanger 1 into the ground. In case the exchanger 1 also serves as foundations for building structure, said end of the tubular body 2 comprises means for attaching the above ground part of the building structure. Said means for attaching of the pressing or ramming mechanism, as well as means for attaching the above ground part of the building structure are known, and need not to be further described. Also, for the sake of clarity, such means are not shown in drawings.

In order to increase efficiency of transfer of heat by the exchanger 1 from or into the ground, the exchanger 1 is provided by elements for enlarging the total outer active surface of the exchanger 1. Such elements are in this example provided in the form of plates 16, arranged in direction of axis of the tubular body 2. These are substantially elements in the form of a "fin", which are disposed on the tubular body 2. When the exchanger 1 is pressed or rammed into the ground, these plates 16 are drawn by the tubular body 2 into the ground, to which they are in fact cutting in. As said elements for enlarging the outer surface of the exchanger 1 create extra resistance during its pressing or ramming into the ground, it is favourable to carry out pre-drilling, or test drilling as described in preceding example.

Interior of the exchanger 1 as well as working principle are analogous as described in preceding and also in following examples of embodiments.

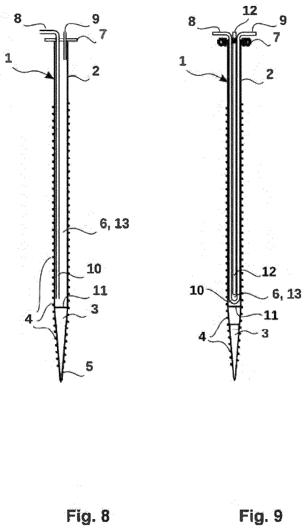

The heat exchanger 1 for the ground heat accumulator according to this technical solution, according to Fig. 8, is in the form of ground screw. The exchanger 1 comprises the tubular body 2 provided at one end by drilling bit 3. The drilling bit 3 can be provided by piercing bit 5. This bit 5 is provided on the drilling bit 3 preferably for the exchanger 1 applied in rocky soils. The tubular body is at the other end provided by the flange 7 having means for connecting the inlet 8 and the outlet 9 of heat transfer medium, where in this example, this flange 7 at the same time serves as a closure of the hollow 6 of the tubular body 2. This flange 7, this end of the tubular body 2 respectively, also comprises means for attaching the drilling-screwing mechanism, when screwing the exchanger 1 into the ground. In case, the exchanger 1 also serves as foundations for building structure, said end of the tubular body 2 comprises means for attaching the above ground part of building structure. Said means for attaching of the drilling-screwing mechanism, as well as means for attaching the above ground part of building structure are known, and need not to be further described. Also, for the sake of clarity, such means are not shown in drawings.

The exchanger 1 is provided by drilling thread 4 on the drilling bit 3, where in this example the thread 4 extends onto the tubular body 2 of the exchanger 1. The thread 4 on the tubular body 2 simultaneously enlarges surface for transfer of heat into the ground. However, the embodiments are also possible, where the thread 4 is on the drilling bit 3 only or it extends only onto small portion of the tubular body 2. This is possible with easily penetrable soils, whereas it is possible to save certain costs for production of the heat exchanger according to this invention, but on the account of decreasing the surface for heat transfer.

In this embodiment, the tubular body 2 is separated from the drilling bit 3 by the wall 11, which can be formed by the bottom of the tubular body 2. Such, the chamber 13 is created in the hollow 6 of the tubular body, within which the means 10 for distribution of the heat transfer medium are disposed. Means 10 for distribution of the heat transfer medium are in this example formed by a pipe with free end in the chamber 13 near the bottom of the tubular body 2, i.e. near the wall 11 between the tubular body 2 and the drilling bit 3. The flange 7 and the wall 11 in this example close the chamber 13 tightly, so that such exchanger 1 is suitable for application of liquid heat transfer medium, which fills freely the chamber 13. Dimensions of the chamber 13 in the tubular body 2, as well as dimensions of the tubular body 2 are determined by calculating the transfer or reception of heat, geologic conditions, or static requirements in case the exchanger 1 serves also as foundations for building structure.

In this embodiment, the heat exchanger works as follows:
The exchanger 1 is by drilling-screwing mechanism, either manually driven or machine driven, screwed in known manner into the ground, without any moving of the soil by drilling or excavation. The inlet 8 and outlet 9 of the heat transfer medium are connected to respective inlet and outlet from the above ground application. The above ground application can be for example cooler of photovoltaic panels, which are mounted on a structure attached to the heat exchanger 1. Heated water form the cooler is supplied by inlet 8 to the means 10 for distribution of the heat transfer medium. Supplied water in this case fills in the chamber 13 within the tubular body 2, and as being also the heat transfer medium, releases heat primarily through the tubular body 2 to the surrounding soil. Cooled water then returns through the outlet 9 to the cooler of photovoltaic panels.

The heat exchanger 1 for the ground heat accumulator according to this technical solution, according to Fig. 9, is also in the form of ground screw similar to one on Fig. 1. The exchanger 1 comprises the tubular body 2 provided at one end by drilling bit 3. The tubular body 2 is at the other end provided by the flange 7 having means for connecting the inlet 8 and the outlet 9 of the heat transfer medium, where in this example, this flange 7 at the same time serves as a closure of the hollow 6 of the tubular body 2. This flange 7, this end of the tubular body 2 respectively, can also comprise means for attaching the drilling-screwing mechanism, when screwing the exchanger 1 into the ground. In case the exchanger 1 also serves as foundations for a building structure, said end of the tubular body 2 can comprise means for attaching the above ground part of the building structure. The exchanger 1 is provided by the thread 4 on the drilling bit 3, where in this example the thread 4 extends onto the tubular body 2 of the exchanger 1.

In this embodiment, the tubular body 2 is separated from the drilling bit 3 by the wall 11, which can be formed by the bottom of the tubular body 2, whereby creating the chamber 13, in which the means 10 for distribution of the heat transfer medium are disposed. Means 10 for distribution of the heat transfer medium are in this example formed by U-shaped pipe. In order to increase transfer of heat from supplied heat transfer medium, the means 10 for distribution of heat transfer medium can be suitably designed, arranged or formed to increase efficiency of heat transfer. The mentioned include for example winding of distribution pipe, use of corrugated hose to create turbulent flow, and so on.

The flange 7 and the wall 11 in this example close the chamber 13 tightly. Heat transfer fluid, e.g. water, is supplied to the chamber 13 through the pipe 12, filling up the chamber 13. Besides water, other fluids or mixtures with desired thermal conductivity can be used.

In this embodiment, the heat exchanger works as follows:
The exchanger 1 is by drilling-screwing mechanism, either manually driven or machine driven, screwed in known manner into the ground, without any moving of the soil by drilling or excavation. The inlet 8 and outlet 9 of the heat transfer medium are connected to respective inlet and outlet from the above ground application. The above ground application can be for example solar thermal collector for heating of water, where in this case, the heat exchanger according to this technical solution can serve for transfer and storage of surplus heat of heated water to ground accumulator. Heated water is supplied by inlet 8 to the means 10 for distribution of the heat transfer medium. Supplied water in this case flows through the means 10 for distribution of the heat transfer medium to the outlet 9, while transferring heat to the fluid in the chamber 13, which further transfers heat primarily through the tubular body 2 to the soil of the ground accumulator.

The heat exchanger 1 for the ground heat exchanger according to this technical solution, according to Fig. 10, is in the form of ground screw. The exchanger 1 comprises the tubular body 2 provided at one end by drilling bit 3. The tubular body 2 is at the other end provided by the flange 7 having means for connecting the inlet 8 and the outlet 9 of heat transfer medium, where in this example, this flange 7 at the same time serves as a closure of the hollow 6 of the tubular body 2. Regarding that the hollow 6 comprises solid substance, the connection between the flange 7 and the tubular body 2 does not have to be tight. This flange 7, this end of the tubular body 2 respectively, can also comprise means for attaching the drilling-screwing mechanism, when screwing the exchanger 1 into the ground. In case the exchanger 1 also serves as foundations for a building structure, said end of the tubular body 2 can comprise means for attaching the above ground part of the building structure. The exchanger 1 is provided by the thread 4 on the drilling bit 3 and a part the tubular body 2.

The chamber 13 provided in the hollow 6 of the tubular body 2 is filled with solid heat transfer substance, for example concrete. Means 10 for distribution of heat transfer medium within the chamber 13 are in this case embedded in concrete. Means 10 for distribution of the heat transfer medium are in this example formed by continuous U-shaped pipe, which for better efficiency of heat transfer has coils.

The heat exchanger 1 according to this example also comprises the inlet 15 of moisturizing water, which is realized by a pipe extending from the upper part of the exchanger 1, through the tubular body 2, down to lower part of the exchanger 1, in this case to the bit 3. The pipe of the inlet 15 of moisturizing water ends in the bit 3, in a hollow of the bit 3 respectively, where moisturizing water leaks through openings 19 into the surrounding soil. This solution is preferable in case of dry soil, whereby such moisturizing improves thermal conductivity of the soil.

The inlet 15 of the moisturizing water can also be provided in similar manner on the exchanger 1 in the form of ground needle. In such case, the inlet 15 is realized by a pipe extending from the upper part of the exchanger 1, through the tubular body 2, down to lower part of the exchanger 1, in this case to the piercing bit 5.

The exchanger 1 can also be provided by temperature sensor 20.

In regard to increase in efficiency of transfer of heat by the exchanger 1 from or into the ground, the exchanger 1 is provided by elements for enlarging the total outer active surface of the exchanger 1. These elements can be in the form of flat thread 14, or plates 16 arranged in direction of axis of the tubular body 2.

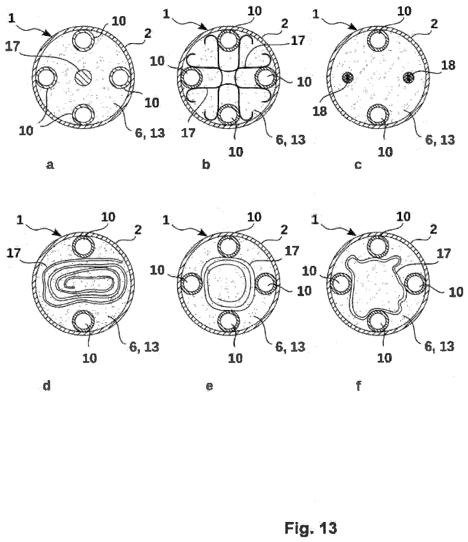

Example of embodiment of the flat thread or threads 14 on the exchanger 1 is shown in Fig. 11. The flat thread or threads 14 can form a part of the thread 4 of the exchanger 1, and/or can be provided independent of the thread 4 of the exchanger 1. Entire thread 4 of the exchanger 1 can also be formed as the flat thread 14. The flat thread or threads 14 can be provided on the tubular body 2 as well as on the drilling bit 3. Example of the plates 16 arranged in direction of axis of the tubular body 2 is shown in Fig. 7. These are substantially elements in the shape of a "fin", which are disposed on the tubular body 2 such that they do not rotate with the exchanger 1 when screwed into the ground. When the exchanger 1 is screwed, these plates 16 are drawn by the tubular body 2 into the ground, to which they are in fact cutting in. As it is clear from Fig. 13, these elements for enlarging the total outer active surface of the exchanger 1 can be combined.

The above described elements 14, 16 are designed to enlarge the total outer active surface of the exchanger 1. The exchanger 1 can further comprise also elements 17, 18 for improving the transfer and distribution of heat within the exchanger 1, i.e. within the hollow 6 or in the chamber 13. Examples of said elements 17, 18 for improving the transfer and distribution of heat are shown in Fig. 11, in variants a, b, c, d, e, f.

The hollow 6, the chamber 13 respectively, is filled with solid substance, e.g. concrete. In this solid substance the means 10 for distribution of heat transfer medium and elements 17, 18 for improving the transfer and distribution of heat are embedded.

In the example according to Fig. 13a, the elements 17 are formed by steel rod disposed substantially at the axis of the chamber 13.

In the example according to Fig. 13b, the elements 17 are formed by series of shaped sheet metal, which are in mutual contact, while contacting the means 10 for distribution of the heat transfer medium and also the tubular body 2.

In the example according to Fig. 13c, the elements 18 for improving, in this case heat transfer, in the form of resistance wires, which can be connected to electric power source are embedded, together with the means 10 for distribution of the heat transfer medium. Such embodiment of the heat exchanger 1 serves especially for increasing the heat input by means of electric current in case an increase of heat in ground heat accumulator is required.

In examples according to Fig. 13 d, e, f, the elements 17 are formed by coiled or circled sheet metal, which does not have to be in contact with the means 10 for distribution of the heat transfer medium or with the tubular body 2, Fig. 8d, or this coiled or circled sheet metal is in contact with the means 10 for distribution of heat transfer medium only, Fig. 13 e, f.

If necessary, for example to reach greater depths, the tubular body 2 can be composed from several parts. In such case, another part of the tubular body 2 is connected to the tubular body already applied in the ground, and pressing, ramming, or drilling-screwing is continued. Connection of the parts of the tubular body 2 can be realized in known manners for pipe connections, either tight or not tight. Such separate parts of the tubular body 2, can also comprise all possible above described elements for increasing of the total outer active surface of the exchanger 1 either individually or in combination.

### Industrial applicability

The ground heat exchanger according to this technical solution can be used everywhere the need for accumulation of heat surplus form solar applications exists, such as particularly solar thermal collectors, photovoltaic panels and so on, to later use this heat in cold seasons, and periods of insufficient production of heat by solar thermal collectors, especially in winter. The ground heat exchanger according to this technical solution can be used also for cooling, i.e. absorbing heat from rooms, especially rooms with already existing heating installation ducts.

## Claims

1. A ground heat accumulator composed of a substantially circular field of heat exchangers (1), wherein each of the heat exchangers (1) comprises a tubular body (2) with a hollow (6) for heat transfer medium, wherein the tubular body (2) comprises an inlet (8) for supply of heat transfer medium from solar applications and an outlet (9) for heat transfer medium to be provided to energy applications and/or solar applications, wherein a chamber (13) is disposed within the hollow (6) of the tubular body (2), the chamber (13) comprising means (10) for distribution of the heat transfer medium, the means (10) for distribution being connected to the inlet (8) and/or the outlet (9) of the heat transfer medium, wherein the heat exchangers are connected in series, **characterized in that** the heat exchangers (1) are arranged in rows around a geometric centre of the accumulator and are connected in radial lines from the center of the accumulator, such that heat transfer medium flows through a distributor (23, 25) and ducts (26) firstly to the heat exchangers (1) closest to the centre of the accumulator, and then continues through radial lines of the exchangers (1) from the centre of the accumulator to the heat exchangers (1) on the periphery of the accumulator, and to a distributor (22, 24), and the tubular body (2) is provided by means for pressing, ramming, or drilling-screwing into the ground.

2. The ground heat accumulator according to claim 1, **characterized in that**, in the outer row of the exchangers (1) of the accumulator, the exchangers (1) are connected in series in row on the periphery of the accumulator.

3. The ground heat accumulator according to claim 1, **characterized in that**, at least one tank reservoir (27) with separate heat transfer/storage medium, containing a further heat exchanger (28) is placed substantially in the geometric centre of the accumulator.

4. The ground heat accumulator according to claim 3 **characterized in that** the heat exchangers (1) are installed on concentric circles around the tank (27), whereby the heat exchangers (1) are connected through the distributors in series so that in the first circle from the tank (27), the exchangers (1) are connected in rows on the periphery of the tank (27), and the other exchangers (1) are connected in series on radials from the centre of the accumulator.

5. The ground heat accumulator according to claim 1, 2, 3 or 4 **characterized in that**, the heat exchangers (1) comprise a further inlet (15) of moisturizing water, in the form of a pipe extending from the upper part of the exchanger (1), through the tubular body (2), down to lower part of the exchanger (1).

## Patentansprüche

1. Erdwärmespeicher, der durch ein im Grunde genommen Kreisfeld von Wärmetauschern (1) gebildet wird, wo jeder der Wärmetauscher (1) einen Rohrkörper (2) mit einem Hohlraum (6) für einen Wärmeträger aufweist, wo der Rohrkörper (2) eine Zuführung (8) des Wärmeträgers aus den Solaranwendungen und eine Abführung (9) des Wärmeträgers in die energetischen Anwendungen und/oder Solaranwendungen aufweist, wobei in dem Hohlraum (6) des Rohrkörpers (2) eine Kammer (13) platziert ist, die Kammer (13) die Mittel (10) zur Verteilung des Wärmeträgers aufweist, die Mittel (10) zur Verteilung dabei an eine Zuführung (8) und/oder Abführung (9) des Wärmeträgers angeschlossen sind, wo die Wärmetauscher in der Reihe hintereinander verbunden sind, **dadurch gekennzeichnet, dass** die Wärmetauscher (1) in den Reihen um geometrische Mitte des Speichers herum angeordnet sind und in den Radialreihen von der Mitte des Speichers auf solche Weise verbunden sind, dass der Wärmeträger über den Verteiler (23, 25) und die Leitungen (26) zuerst in die Wärmetauscher (1) am nächsten zur Mitte des Speichers strömt und dann über Radialreihen der Wärmetauscher (1) von der Mitte des Speichers in die Wärmetauscher (1) auf dem Umfang des Speichers, und in den Verteiler (22, 24) fortsetzt, und der Rohrkörper (2) die Mittel zum Hineindrücken, Anstoßen oder Bohren in die Erde aufweist.

2. Erdwärmespeicher nach dem Anspruch 1, **dadurch gekennzeichnet, dass** auf der Außenreihe der Wärmetauscher (1) des Speichers die Wärmetauscher (1) in der Reihe auf dem Außenumfang des Speichers seriengeschaltet sind.

3. Erdwärmespeicher nach dem Anspruch 1, **dadurch gekennzeichnet, dass** in der im Grunde genommen geometrischen Mitte des Speichers mindestens ein Behälter (27) mit einem selbstständigen Wärmeträger/Wärmeübertragungsmedium platziert ist, in dem ein weiterer Wärmetauscher (28) platziert ist.

4. Erdwärmespeicher nach dem Anspruch 3, **dadurch gekennzeichnet, dass** die Wärmetauscher (1) um den Behälter (27) herum in den konzentrischen Kreislinien platziert sind, wobei die Wärmetauscher (1) über die Verteiler auf solche Weise seriengeschaltet sind, dass auf der ersten Kreislinie von dem Behälter (27) die Wärmetauscher (1) in den Reihen auf dem Umfang des Behälters (27) geschaltet sind, und weitere Wärmetauscher (1) auf den Radialen von der Mitte des Speichers seriengeschaltet sind.

5. Erdwärmespeicher nach dem Anspruch 1, 2, 3, oder 4 **dadurch gekennzeichnet, dass** die Wärmetauscher (1) eine weitere Zuführung (15) eines Bewässerungswassers in der Form eines Rohres aufweisen, das von dem oberen Teil des Wärmetauschers (1), über Rohrkörper (2) in den unteren Teil des Wärmetauschers (1) durchgeht.

## Revendications

1. Accumulateur de terre de la chaleur formé en principe par le réseau circulaire d'échangeurs de chaleur (1), dans lequel chaque échangeur de chaleur (1) comprend un corps tubulaire (2) avec une cavité (6) pour le moyen de transfert du chaleur, dans lequel le corps tubulaire (2) comprend l'entrée (8) du moyen de transfert du chaleur des applications solaires et la sortie (9) du moyen de transfert du chaleur dans les applications énergétiques et/ou les applications solaires, tandis que la chambre (13) est située dans la cavité (6) du corps tubulaire (2), la chambre (13) comprend des moyens (10) pour la distribution du moyen de transfert du chaleur, les moyens (10) pour la distribution (10) sont reliés à l'entrée (8) et/ ou à la sortie (9) du moyen de transfert du chaleur où les échangeurs de chaleur sont connectés en série, **caractérisé en ce que** les échangeurs de chaleur (1) sont disposés en rangées autour du centre géométrique de l'accumulateur et ils sont reliés en rangées radiales à partir du centre de l'accumulateur de sorte que le moyen de transfert du chaleur s'écoule d'abord à travers le distributeur (23, 25) et les conduits (26) dans les échangeurs de chaleur (1) les plus proches du centre de l'accumulateur, et il s'étend ensuite à travers les rangées radiales d'échangeurs de chaleur (1) du centre de l'accumulateur jusqu'aux échangeurs de chaleur (1) sur le circuit de l'accumulateur et dans le distributeur (22, 24), et le corps tubulaire (2) est équipé par les moyens pour presser, enfoncer ou percer dans le sol.

2. Accumulateur de terre selon la revendication 1, **caractérisé en ce que** sur la rangée extérieure des échangeurs (1) de l'accumulateur, les échangeurs (1) sont connectés en série en rangée sur la circonférence extérieure de l'accumulateur.

3. Accumulateur de terre de la chaleur selon la revendication 1, **caractérisé en ce qu'**au centre géométrique de l'accumulateur en principe il y a au moins un réservoir (27) avec le moyen indépendant du stockage/du transfert de la chaleur, dans ce réservoir un autre échangeur de chaleur (28) est situé.

4. Accumulateur de terre de la chaleur selon la revendication 3, **caractérisé en ce que** les échangeurs de chaleur (1) sont disposés sur les cercles concentriques autour du réservoir (27), tandis que les échangeurs de chaleur (1) sont connectés en série à travers les distributeurs de sorte que sur le premier cercle à partir du réservoir (27) les échangeurs (1) sont connectés en rangées au bord du réservoir (27), et les autres échangeurs (1) sont connectés en série sur les radiaux à partir du centre de l'accumulateur.

5. Accumulateur de terre de la chaleur selon la revendication 1, 2, 3 ou 4, **caractérisé en ce que** les échangeurs de chaleur (1) comprennent l'autre apport (15) de l'eau d'irrigation en forme de tuyau partant de la partie supérieure de l'échangeur de chaleur (1) à travers le corps tubulaire (2) au bas de l'échangeur de chaleur (1).
